# EUROPÄISCHE PATENTSCHRIFT

(11) **EP 2 594 473 B1**
(45) Veröffentlichungstag und Bekanntmachung des Hinweises auf die Patenterteilung: **30.04.2014**
(21) Anmeldenummer: 12007252.5
(22) Anmeldetag: 20.10.2012
(51) Int. Cl.: B62M 9/1244

(54) **Umwerfereinrichtung für eine Fahrradschaltung, insbesondere hintere Umwerfereinrichtung**
Derailleur device for a bicycle gear system, in particular rear derailleur device
Dispositif à dérailleur pour un agencement de vitesses de vélo, notamment dispositif à dérailleur arrière

(30) Priorität: 18.11.2011 DE 102011118912
(43) Veröffentlichungstag der Anmeldung: 22.05.2013
(73) Patentinhaber: SRAM Deutschland GmbH, 97424 Schweinfurt (DE)
(72) Erfinder: Böhm, Robert, 97453 Mainberg (DE); Harcke, Tobias, 97525 Schwebheim (DE); Benz, Andreas, 97453 Mainberg (DE); Rodegro, Oliver, 97437 Hassfurt (DE)

(56) Entgegenhaltungen:
- EP-A1- 1 902 936
- CH-A- 284 668
- DE-A1-102007 012 509
- US-A- 3 973 447

## Beschreibung

Die vorliegende Erfindung betrifft eine Umwerfereinrichtung für eine Fahrradschaltung, insbesondere eine hintere Umwerfereinrichtung, umfassend einen Basiskörper, der an einem Fahrradrahmen anbringbar ist, ein bewegbares Element, das mit dem Basiskörper gekoppelt und relativ zu diesem verlagerbar ist, eine Kettenführungsvorrichtung, die mit dem bewegbaren Element gekoppelt und relativ zu diesem um eine Schwenkachse verschwenkbar ist, eine Vorspanneinrichtung, mit der die Kettenführungsvorrichtung relativ zu dem bewegbaren Element um die Schwenkachse in eine Ausgangsstellung vorgespannt ist, wobei die Kettenführungsvorrichtung gegen eine Spannkraft der Vorspanneinrichtung aus der Ausgangsstellung heraus um die Schwenkachse in verschiedene Betriebsstellungen verschwenkbar ist, und wenigstens eine Blockiervorrichtung, die dazu vorgesehen ist, die Kettenführungsvorrichtung in wenigstens einer von der Ausgangsstellung abweichenden Blockierstellung relativ zu dem bewegbaren Element zu blockieren.

Eine derartige Umwerfereinrichtung ist bereits aus dem Stand der Technik bekannt. Das Dokument US 3,973,447 zeigt eine Umwerfereinrichtung, bei der die Kettenführungsvorrichtung mit zwei Umlenkritzeln ausgebildet ist. Mittels eines fest angeordneten Fixierstifts lässt sich die Kettenführungsvorrichtung relativ zu dem bewegbaren Element, an dem die Kettenführungsvorrichtung schwenkbar angebracht ist, in einer vorbestimmten Auslenkstellung blockieren.

Dokument EP 190 2936 A1wird als der nächste Stand der Technik angesehen und offenbart die Präambel des Anspruchs 1.

Als weiterer Stand der Technik ist auf die Dokumente DE 2 153 407 A1 und DT 25 57 975 B1 zu verweisen.

Fahrradschaltungen, bei denen an der Hinterradachse eines Fahrrads ein Ritzelsatz mit mehreren Ritzeln vorgesehen ist, wobei die Kette je nach gewähltem Gang auf größeren oder kleineren Ritzeln mittels eines Umwerfers positioniert wird, sind weit verbreitet und mittlerweile zuverlässig in ihrer Funktionsweise. Es hat sich aber gezeigt, dass insbesondere dann, wenn das Hinterrad bei solchen Fahrradschaltungen demontiert und wieder montiert wird, sei es zu Reparaturzwecken oder um das Fahrrad von einem Transportzustand in einen fahrbereiten Zustand zu versetzen, insbesondere das "Einfädeln" der Hinterradachse in entsprechende Aufnahmebereiche der hinteren Gabel des Rahmens vor allem dann Schwierigkeiten macht, wenn eine solche Kettenschaltung mit einer hinteren Umwerfereinrichtung versehen ist. Aufgrund der federbedingten Spannkräfte, die bei solchen Umwerfereinrichtungen wirken, bewegt sich die Umwerfereinrichtung entsprechend der Spannkräfte beim Entfernen des Hinterrads und des daran angebrachten Ritzelsatzes selbsttägig in ihre Ausgangsstellung. Wird das Hinterrad wieder montiert, so ist der Kettenverlauf bedingt durch diese Ausgangsstellung für die Montage des Hinterrads und für das oben bezeichnete Einfädeln hinderlich. Zusätzlich zu dem an sich schon problematischen Einfädeln der Achse in die Aufnahmebereiche der hinteren Gabel des Rahmens muss dann auch noch die Umwerfereinrichtung entgegen der Federkräfte aus ihrer Ausgangsstellung heraus in eine Betriebsstellung ausgelenkt werden, um der Kette einen Verlauf zu verleihen, der eine Hinterradmontage zulässt. Das gleichzeitige Einfädeln der Hinterradachse in die Aufnahmebereiche des Fahrradrahmens und das Positionieren der Umwerfereinrichtung derart, dass eine Hinterradmontage möglich ist, erfordert regelmäßig ein gewisses Geschick vom Monteur. Dazu kommt, dass dieser dabei auch geschmierte und oft (stark) verschmutzte Teile zur Positionierung der Umwerfereinrichtung in eine montagefreundliche Stellung bewegen muss, was unerwünscht ist. Schließlich ist es bei einigen Konstruktionen auch erforderlich, die geschmierte und in der Regel verschmutzte Kette selbst anzufassen. Eine derartige Montage ist unkomfortabel.

Die vorliegende Erfindung setzt an diesem Problem an und zielt darauf ab, eine Umwerfereinrichtung zu schaffen, die gegenüber dem bekannten Stand der Technik wesentlich montagefreundlicher für ein Einsetzen des Hinterrads ist.

Diese Aufgabe wird durch eine Umwerfereinrichtung der eingangs bezeichneten Art gelöst, bei der vorgesehen ist, dass die Blockiervorrichtung ein Blockierelement aufweist, das zwischen einer Passivstellung, in der die Kettenführungsvorrichtung relativ zu dem bewegbaren Element freigegeben ist, und wenigstens einer Aktivstellung, in der die Kettenführungsvorrichtung in der wenigstens eine Blockierstellung gehalten wird, verlagerbar ist.

Anders als beim Stand der Technik, der entweder eine passive Blockiervorrichtung oder überhaupt keine Blockiervorrichtung vorsieht und daher hinsichtlich der Montagefreundlichkeit beim Einsetzen des Hinterrads keine zufriedenstellende Abhilfe bietet, sieht die vorliegende Erfindung vor, dass die Umwerfereinrichtung sozusagen aktiv in einen Montagezustand gebracht und in diesem gehalten werden kann. Dies wird dadurch erreicht, dass die Blockiervorrichtung aus der Passivstellung, in der sie einen herkömmlichen Betrieb der Umwerfereinrichtung ohne Beeinträchtigung zulässt, in die blockierende Aktivstellung gebracht wird, in der sie die Umwerfereinrichtung in einer vorbestimmten Betriebsstellung fixiert und so sozusagen in einem montagefreundlichen Zustand hält, der ein einfaches Einfädeln des Hinterrads in den Fahrradrahmen ermöglicht. Dabei muss nicht zusätzlich während des Einfädelns vom Monteur darauf geachtet werden, dass auch die Umwerfereinrichtung selbst noch manipuliert und positioniert wird. Stattdessen kann der Monteur mit der erfindungsgemäßen Umwerfereinrichtung das Blockierelement vorab aus seiner Passivstellung in seine blockierende Aktivstellung bewegen und so die Blockiervorrichtung in einer montagefreundlichen Sollstellung halten, d.h. in der Blockierstellung, in der die Kettenführungsvorrichtung für eine einfache Montage des Hinterrads positioniert und gehalten wird.

Die vorliegende Erfindung ermöglicht es also, die Umwerfereinrichtung für die Montage vorzupositionieren und in dieser Stellung zu halten, bis die Montage des Hinterrads abgeschlossen ist. Dabei oder in der Folge kann die Blockiervorrichtung wieder automatisch bei einer Schaltungsbetätigung oder durch Betätigen des Blockierelements aus der Aktivstellung in seine Passivstellung in einen herkömmlichen betriebsfähigen Zustand versetzt werden, in der ein Umschalten der Gänge möglich ist.

Ferner erleichtert die vorliegende Erfindung auch die Montage der Kette, weil diese während der Montage leichter durch die Umlenkritzel der Umwerfereinrichtung geführt werden kann.

Es sei angemerkt, dass in der Regel eine einzige Blockierstellung für die Umwerfereinrichtung ausreicht. Gegebenenfalls können aber auch mehrere Blockierstellungen vorgesehen sein, je nachdem welcher Schaltzustand gerade erreicht ist, beispielsweise in Abhängigkeit davon, ob die Umwerfereinrichtung einen Schaltzustand eingenommen hat, bei dem die Kette über ein kleines Ritzel oder über ein großes Ritzel des an der Hinterradachse montierten Ritzelsatzes geführt ist.

Eine Weiterbildung der Erfindung sieht vor, dass die Blockiervorrichtung wenigstens ein Kontaktelement aufweist, das zum Blockieren der Kettenführungsvorrichtung in der wenigstens einen Blockierstellung mit dem Blockierelement in Eingriff bringbar ist. Das Kontaktelement ist dabei speziell für eine Wechselwirkung mit dem Blockierelement in der Blockierstellung ausgebildet und sorgt dafür, dass die Kettenführungsvorrichtung in der Blockierstellung über das Blockierelement festgehalten wird. In diesem Zusammenhang kann vorgesehen sein, dass das Blockierelement an einer Komponente von bewegbarem Element und Kettenführungsvorrichtung angeordnet ist, und dass das Kontaktelement an der anderen Komponente von bewegbarem Element und Kettenführungsvorrichtung angeordnet ist. Das Blockierelement kann beispielsweise ein profilierter Zapfen, eine Anlagefläche oder dergleichen sein. Je nach Bedarf ist das Blockierelement also am bewegbaren Element oder an der Kettenführungsvorrichtung angeordnet, wohingegen das Kontaktelement an der jeweils anderen Komponente angeordnet ist. Die Anordnung an der einen oder anderen Komponente kann je nach den konstruktiven und strukturellen Gegebenheiten vorgenommen werden. Entscheidend bei dieser Ausführungsform ist eine zuverlässige Wechselwirkung zwischen Blockierelement und Kontaktelement.

Bei einer Ausführungsvariante der Erfindung kann vorgesehen sein, dass das Blockierelement in Richtung der Schwenkachse oder parallel hierzu verlagerbar ist. Alternativ hierzu ist es möglich, dass das Blockierelement in Richtung quer zur Schwenkachse, vorzugsweise in einer zur Schwenkachse im Wesentlichen orthogonalen Ebene, verlagerbar ist. Eine weitere Alternative sieht vor, dass das Blockierelement um eine zur Schwenkachse nicht parallele Drehachse verschwenkbar ist. Beispielsweise ist es möglich, dass das Blockierelement entlang einer Längsachse zwischen der Aktivstellung und der Passivstellung verlagerbar ist. So kann das Blockierelement ein Bolzen oder ein Riegel sein, der dementsprechend linear verlagerbar ist. Vorzugsweise ist vorgesehen, dass das Blockierelement in die Passivstellung vorgespannt ist. Dadurch wird verhindert, dass das Blockierelement unbeabsichtigt durch Vibrationen oder anderweitige mechanische Belastung während des Fahrens aus seiner Passivstellung heraus in die Aktivstellung bewegt wird und die Umwerfereinrichtung blockiert, obwohl dies vom Fahrer des Fahrrads überhaupt nicht beabsichtigt ist. Die Vorspannung des Blockierelements in die Passivstellung sorgt also dafür, dass lediglich durch aktives Überwinden der Vorspannung, also nur dann, wenn es tatsächlich beabsichtigt ist, das Blockierelement aus der Passivstellung heraus in seine Aktivstellung gelangt und tatsächlich die Umwerfereinrichtung in der wenigstens einen Blockierstellung blockiert.

Eine bevorzugte Ausführungsvariante sieht vor, dass das Blockierelement von einem Schubbolzen gebildet ist, der mit einer Kontaktfläche oder einem Halteprofil ausgebildet ist, womit er in der Blockierstellung formschlüssig oder kraftschlüssig zum Blockieren der Kettenführungsvorrichtung relativ zum bewegbaren Element an einer dieser Komponenten angreift. Bei dieser Ausführungsvariante kann der Schubbolzen beispielsweise in einer entsprechenden Aufnahme in der Blockierstellung formschlüssig aufgenommen werden und so das bewegbare Element mit der Kettenführungseinrichtung sicher koppeln. Alternativ ist es auch möglich, dass das Halteprofil an einer entsprechend profilierten Gegenfläche angreift und so die beiden Komponenten Kettenführungsvorrichtung und bewegbares Element formschlüssig aneinander hält.

Der Schubbolzen kann in Form eines Riegels oder in Form eines Druckbolzens ausgebildet sein. Dabei kann vorgesehen sein, dass der Schubbolzen eine Druckfläche oder einen Betätigungsvorsprung zur manuellen Betätigung aufweist. Vorstehend wurde bereits angedeutet, dass das Blockierelement federvorgespannt sein kann. Dies trifft auch für die Schubbolzen der speziellen Ausführung vor, der vorzugsweise in seine Passivstellung federvorgespannt und gegen diese Federvorspannung betätigbar ist.

Eine alternative Ausführungsvariante der Erfindung sieht vor, dass das Blockierelement von einem Schwenkbügel gebildet ist, der zwischen der Blockierstellung der Passivstellung verschwenkbar ist. Ein derartiger Schwenkbügel lässt sich aus der Passivstellung in die Aktivstellung verschwenken. Der Schwenkbügel kann ebenfalls federvorgespannt sein, sei es durch eine zusätzliche Feder oder durch eine inhärente Eigenspannung. Letzteres wird erfindungsgemäß beispielsweise dadurch erreicht, dass der Schwenkbügel aus einem Federelement, beispielsweise einem Federdraht, hergestellt ist, dessen Enden mit einem Achsversatz gelagert sind und so Federwirkung hervorrufen. Der Schwenkbügel kann mit dem Kontaktelement zusammenwirken. Dabei kann das Kontaktelement als profilierter Kontaktbolzen ausgebildet sein. Auch der Schwenkbügel selbst kann eine Ausnehmung oder Profilierung aufweisen, die eine sichere Aufnahme des Kontaktelements vorsieht.

Eine Weiterbildung der Erfindung sieht vor, dass das Blockierelement in seiner Blockierstellung festlegbar ist, vorzugsweise durch eine Federvorspannung oder durch Verklemmen oder durch Verrasten. Die Federvorspannung kann durch ein zusätzliches Federbauteil oder durch eine Eigenspannung hervorgerufen werden. Das Verklemmen oder Verrasten kann durch Formschluss oder Kraftschluss erzielt werden.

Eine Weiterbildung der Erfindung sieht vor, dass die Umwerfereinrichtung mit einer Dämpfungsanordnung ausgebildet ist, die zwischen dem bewegbaren Element und der Kettenführungsvorrichtung zum Dämpfen der Relativbewegung zwischen diesen Komponenten vorgesehen ist. Dämpfungsanordnungen dieser Art werden vorgesehen, um Schaltungen, die für Geländefahrräder, sogenannte Mountainbikes, eingesetzt werden, gegen übermäßige Vibrationen zu sichern. Beim Befahren von unebenem Gelände werden nämlich häufig die verschwenkbaren Kettenführungsvorrichtungen entgegen der Vorspannkraft zu Schwingungen angeregt, was im Extremfall zu einer unzureichenden Kraftübertragung über die Kette bis hin zur Fehlfunktion der Schaltung führen kann. Zur Vermeidung derartiger Schwingungsanregungen oder zumindest zur Minderung werden entsprechende Dämpfungsanordnungen vorgesehen. Diese Dämpfungsanordnungen haben aber den Nachteil, dass sie die eingangs diskutierte Montage sogar weiter erschweren können, weil auch noch die von der Dämpfungsanordnung herrührenden Dämpfungskräfte überwunden werden müssen, wenn die Kettenführungsvorrichtung in eine montagefreundliche Stellung gebracht wird. Daher kommt die vorliegende Erfindung einer geeigneten Blockiervorrichtung nicht nur, aber insbesondere bei solchen Umwerfereinrichtungen vorteilhaft zur Geltung, die mit entsprechenden Dämpfungsanordnungen versehen sind.

Eine Weiterbildung der Erfindung sieht vor, dass die Dämpfungsanordnung eine Reibvorrichtung zur Ausübung von Reibkräften während des Verschwenkens der Kettenführungsvorrichtung relativ zu dem bewegbaren Element aufweist.

Die Erfindung wird im Folgenden beispielhaft anhand der beiliegenden Figuren erläutert. Es stellen dar:
- Fig. 1: eine erfindungsgemäße Umwerfereinrichtung in ihrer Ausgangsstellung;
- Fig. 2: die erfindungsgemäße Umwerfereinrichtung in einer Betriebsstellung;
- Fig. 3: eine Detailansicht zu einer ersten Ausführungsform der erfindungsgemäßen Umwerfereinrichtung mit einer Blockiervorrichtung;
- Fig. 4: eine Schnittansicht zu Fig. 3;
- Fig. 5: eine weitere Detailansicht zu Fig. 3 aus einem anderen Blickwinkel;
- Fig. 6: eine Detailansicht zu einer zweiten Ausführungsform der erfindungsgemäßen Umwerfereinrichtung mit einer riegelartigen Blockiervorrichtung;
- Fig. 7: eine dreidimensionale Detailansicht der Ausführungsform gemäß Fig. 6 aus einem anderen Blickwinkel;
- Fig. 8: eine Detailansicht zu einer dritten Ausführungsform der erfindungsgemäßen Umwerfereinrichtung mit einer bügelartigen Blockiervorrichtung;
- Fig. 9: eine dreidimensionale Detailansicht der Ausführungsform gemäß Fig. 8 aus einem anderen Blickwinkel;
- Fig. 10: eine Detailansicht einer vierten Ausführungsform der Erfindung;
- Fig. 11: eine Detailansicht zu der vierten Ausführungsform der Erfindung aus einem anderen Blickwinkel;
- Fig. 12: eine Detailansicht zu einer fünften Ausführungsform der Erfindung; und
- Fig. 13- 15: Detailansichten zu einer sechsten Ausführungsform der Erfindung.

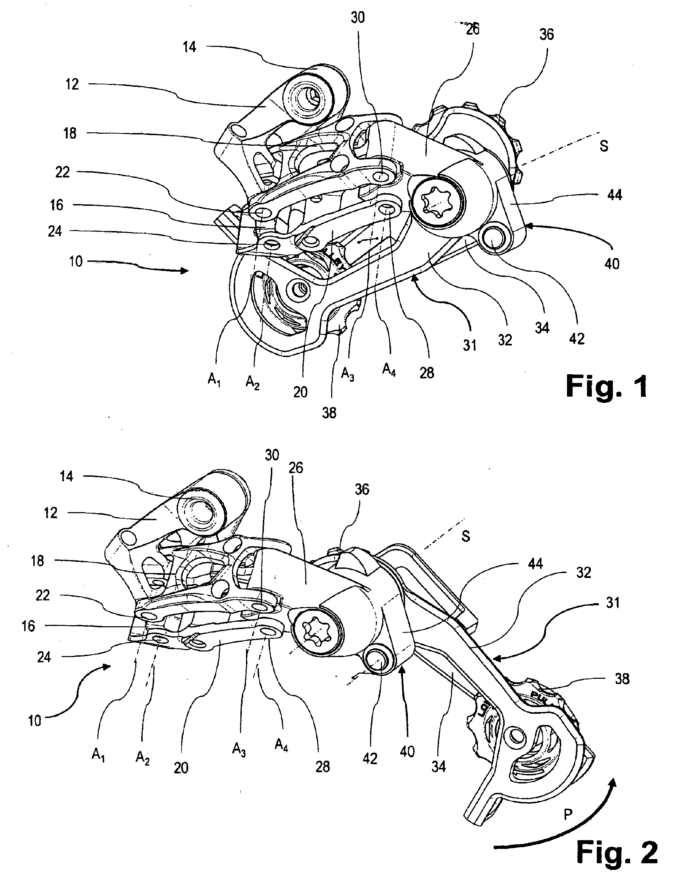

In Fig. 1 und 2 ist eine erfindungsgemäße Umwerfereinrichtung in Form eines Kettenumwerfers der an der Hinterradgabel eines Fahrradrahmens anzubringen ist, in räumlicher Darstellung gezeigt und allgemein mit 10 bezeichnet. Diese Umwerfereinrichtung 10 umfasst einen Basiskörper 12, der mit einem Befestigungsauge 14 in an sich bekannter Weise an dem Fahrradrahmen befestigbar ist. Der Basiskörper 12 ist mehrfach abgewinkelt und weist an seinem vom Befestigungsauge 14 abgewandten Ende einen Lagerabschnitt 16 auf. An diesem Lagerabschnitt 16 sind zwei Schwenkarme 18, 20 über Lagerstifte 22, 24 relativ zum Basiskörper 12 verschwenkbar gelagert. An den vom Basiskörper 12 abgewandten freien Enden der Schwenkarme 18 und 20 sind diese ebenfalls schwenkbar mit einem bewegbaren Element 26 verbunden. Auch hierzu dienen wiederum Lagerstifte 28, 30. Die Lagerachsen A1, A2, A3, A4 der jeweiligen Schwenklagerung sind zueinander im Wesentlichen parallel und bilden in einer achsorthogonalen Ebene im Wesentlichen Eckpunkte eines Parallelogramms. Bei einer im Wesentlichen parallelen Verschwenkung der beiden Lagerarme 18 und 20 bewegt sich somit das bewegliche Element 26 relativ zum Basiskörper 12 entlang einer Kreisbahn und wird dabei aufgrund der Wirkung der Parallelogramm-Hebelanordnung 16, 18, 20, 26 in einer gewünschten Sollausrichtung gehalten.

An dem bewegbaren Element 26 ist eine Kettenführungsvorrichtung 31 um eine Schwenkachse S schwenkbar gelagert. Die Kettenführungsvorrichtung 31 umfasst ein erstes armartiges Kettenführungsglied 32 und ein im Wesentlichen parallel zu diesem angeordnetes zweites Kettenführungsglied 34. Zwischen den beiden Kettenführungsgliedern 32, 34 sind ein erstes (Umlenk-)Ritzel 36 nahe dem bewegbaren Element und ein von diesem entfernt angeordnetes zweites (Umlenk-)Ritzel 38 vorgesehen, die beide reibungsarmdrehbar zwischen den beiden Kettenführungsglieder 32 und 34 gelagert sind. Die Ritzel 36, 38 führen eine Kette (nicht gezeigt) in an sich bekannter Art und Weise s-förmig.

In dem bewegbaren Element 26 sind zum einen eine Federanordnung und darüber hinaus auch eine Dämpfungsanordnung angeordnet. Die Federanordnung sorgt dafür, die Umwerfereinrichtung, insbesondere die Kettenführungsvorrichtung 31 in der in Fig. 2 gezeigten Ausgangsstellung um die Schwenkachse S vorzuspannen. In der in Fig. 2 gezeigten Betriebsstellung wurde die Kettenführungsvorrichtung relativ zum bewegbaren Element 26 um die Schwenkachse S entsprechend dem Pfeil P gegen die Wirkung der Federanordnung ausgelenkt.

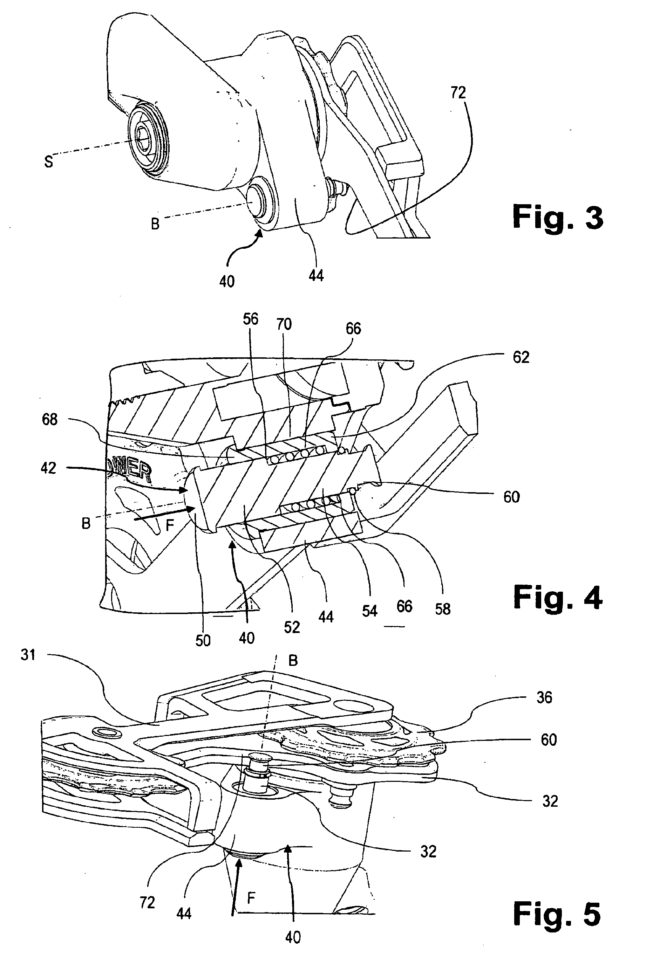

Die vorliegende Erfindung sieht ferner eine Blockiervorrichtung 40 vor. In der in Fig. 1 bis 5 gezeigten Ausführungsvariante weist diese Blockiervorrichtung einen Druckbolzen 42 auf, der gegen die Wirkung einer Federkraft aus einer Passivstellung (Fig. 4) in eine Aktivstellung (Fig. 5) bringbar ist, in der er die Kettenführungsvorrichtung in einer vorbestimmten Betriebsstellung hält, wie dies beispielsweise in Fig. 2, 3 und 5 gezeigt ist. In seiner Passivstellung (siehe Fig. 4) hingegen entfaltet der Bolzen 42 keine Blockierwirkung und die Kettenführungsvorrichtung 31 kann ihre Ausgangsstellung (siehe Fig. 1) unter der Wirkung der im bewegbaren Element 26 angeordneten Federvorrichtung (nicht gezeigt) einnehmen.

Im Folgenden wird auf die Details der Blockiervorrichtung 40 gemäß Figuren 3 bis 5 eingegangen. Der Bolzen 42 ist in einem am bewegbaren Element 26 angeordneten Ansatz 44 aufgenommen und entlang einer Betätigungsachse B, die zur Schwenkachse S im Wesentlichen parallel verläuft, linear verschiebbar. Man erkennt in der Schnittdarstellung gemäß Fig. 4, dass der Bolzen 42 einen Kopfabschnitt 50 aufweist, einen zylindrischen Führungsabschnitt 52, einen gegenüber diesem durchmesserreduzierten weiteren Führungsabschnitt 54, wobei sich zwischen den beiden Führungsabschnitten eine Schulter 56 ausbildet, einen Einstich 58 und einen an seinem freien Ende ausgebildeten mit einer Hinterschnitt versehenen Profilabschnitt 60. Der Bolzen 42 ist in einer Buchse 62 aufgenommen und in dieser über eine Druckfeder 64 in seine in Fig. 4 gezeigte Passivstellung vorgespannt. In dem Einstich 58 ist ein Sicherungsring angeordnet, der als Anschlag für die Passivstellung dient. Die Feder 64 stützt sich einerseits an der Schulter 56 und anderenends an einer Bodenfläche 66 der Buchse 62 ab. Die Buchse 62 ist über einen Flansch 68 in einer zylindrischen Öffnung 70 innerhalb des Ansatzes 44 positioniert.

Man erkennt in Fig. 4, dass bei Ausüben einer Kraft F auf den Kopfabschnitt 50 des Bolzens 42 dieser entgegen der Federkraft der Druckfeder 64 entlang der Betätigungsachse B in Fig. 4 nach rechts bewegbar ist. Dadurch lässt er sich mit seinem Profilabschnitt 60 in Anlage mit einem Kontaktbereich 72 an dem Verbindungsglied 32 der Kettenführungsvorrichtung 31 bringen. Die Profilierung am Profilabschnitt 60 sorgt dafür, dass der Bolzen 42 diesen Kontaktbereich 72 umgreift und so trotz Rückstellwirkung der Feder 64 nicht abrutscht und zurückgezogen wird. Der Bolzen 42 kann also in dieser Aktivstellung, wie sie in Fig. 3 und 5 gezeigt ist, die Kettenführungsvorrichtung 31 in einer gegenüber der Ausgangsstellung (Fig. 1) ausgelenkten Betriebsstellung (beispielsweise in der Betriebsstellung gemäß Fig. 2) entgegen der Federkraft der Federvorrichtung zwischen bewegbarem Element 26 und Kettenführungsvorrichtung 31 halten.

Dies hat den Vorteil, dass auch dann, wenn beispielsweise das Hinterrad des Fahrrads ausgebaut wird und so mangels Hinterachsritzel keine hinreichende Spannung mehr auf die Kette ausgeübt wird, die Kettenführungsvorrichtung 31 in der in Fig. 2 gezeigten Stellung - bedingt durch die Haltewirkung des Bolzens 42 in seiner Aktivstellung - gehalten wird. Dadurch wird die Kette (nicht gezeigt) zusammen mit der Umwerfereinrichtung in einer Weise positioniert, die den Einbau eines Hinterrads mit einem entsprechenden Ritzelsatz gegenüber einem Zustand erheblich erleichtert, in dem sich die Umwerfereinrichtung in ihrer Ausgangsstellung gemäß Fig. 1 befindet.

Nach der Montage kann dann der Umwerfer 10 wieder in eine Betriebsstellung versetzt werden, indem die Kettenführungsvorrichtung 31 geringfügig in Richtung des Pfeils P (siehe Fig. 2) weiter verschwenkt wird, wobei der Bolzen 42 unter seiner Federwirkung automatisch in seine Passivstellung (siehe Fig. 4) zurückschnellt. Dies kann manuell oder durch eine entsprechende Schaltungsbetätigung erfolgen. Die Umwerfereinrichtung 10 ist dann betriebsbereit und kann jede beliebige Betriebsstellung beidseits der in Fig. 2 gezeigten Betriebsstellung einnehmen, d.h. die Kettenführungsvorrichtung kann sich entsprechend der auf sie einwirkenden Federspannung oder entsprechend einer bestimmten Kettenspannung um die Schwenkachse S drehen.

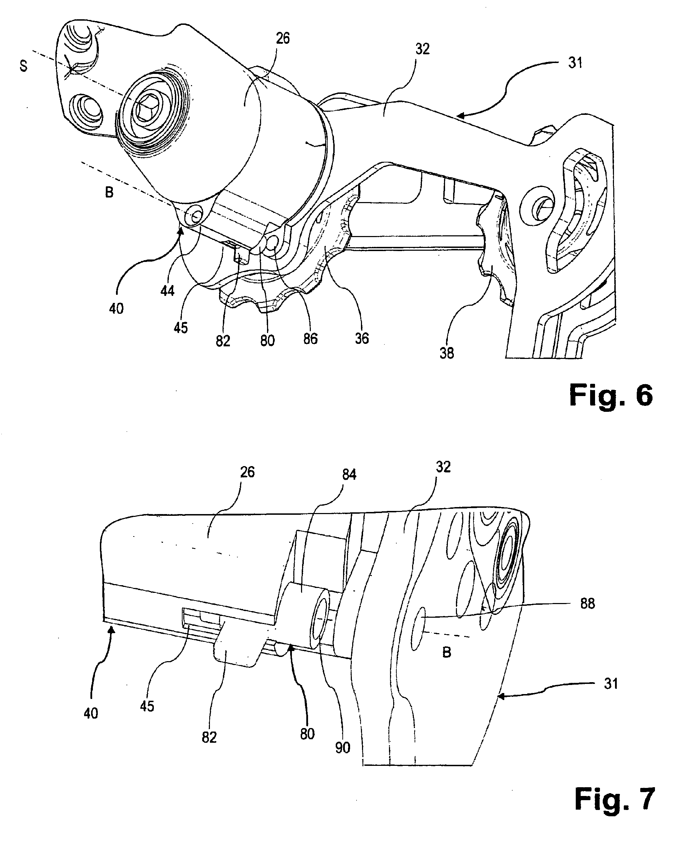

Fig. 6 und 7 zeigen eine zweite Ausführungsvariante der erfindungsgemäßen Umwerfereinrichtung. Es soll lediglich auf die Unterschiede zur ersten Variante eingegangen werden. Für gleichartige oder gleichwirkende Komponenten werden dieselben Bezugszeichen verwendet, wie bei der Beschreibung der Fig. 1 bis 5.

Die Ausführungsform gemäß Fig. 6 und 7 unterscheidet sich von der ersten Ausführungsform gemäß Fig. 1 bis 5 lediglich in der Ausgestaltung der Blockiervorrichtung 40. Wiederum ist in dem Ansatz 44 am bewegbaren Element 26 ein Bolzen 80 vorgesehen. Er ist in Form eines Riegels mit einem Riegelvorsprung 82 ausgebildet. Der Riegelvorsprung 82 ist in einem Schlitz 45 geführt. Der Bolzen 80 kann wieder federvorgespannt sein oder aber auch nur gegen die Wirkung von Reibkräften in dem Ansatz 44 verschiebbar sein. An seinem freien Ende ist der Bolzen 80 mit einer zylindrischen Außenumfangsfläche 84 versehen. Mit dieser kann er in eine entsprechend groß dimensionierte Aufnahmeöffnung 86 blockierend eingeschoben werden. Alternativ oder zusätzlich ist es möglich, durch eine Durchgangsöffnung 88 noch ein Bolzenelement (nicht gezeigt) sowohl durch das Verbindungsglied 32 der Kettenführungsvorrichtung als auch durch eine Aufnahmeöffnung 90 im Bolzen 80 einzuschieben. Dadurch lässt sich wiederum die Kettenführungsvorrichtung 31 relativ zum bewegbaren Element 26 in einer vorbestimmten Betriebsstellung festlegen und so in einer montagefreundlichen Stellung positionieren, um den Einbau eines Hinterrads mit einem entsprechenden Ritzelsatz zu vereinfachen.

Nach dem Einbau kann dann die Kopplung zwischen dem beweglichen Element 26 und der Kettenführungsvorrichtung 31 wieder gelöst werden, indem der Bolzen 80 durch Betätigung des Vorsprungs 82, d.h. durch Verschieben des Vorsprungs 82 entlang des Schlitzes 45 entlang der Betätigungsachse B in eine Passivstellung verlagert wird und gegebenenfalls ein entsprechender Stift aus der Öffnung 88 herausgezogen und so außer Eingriff mit der Öffnung 90 gebracht wird. In der Folge ist die Umwerfereinrichtung gemäß Fig. 6 und 7 wieder in üblicher Weise betriebsbereit.

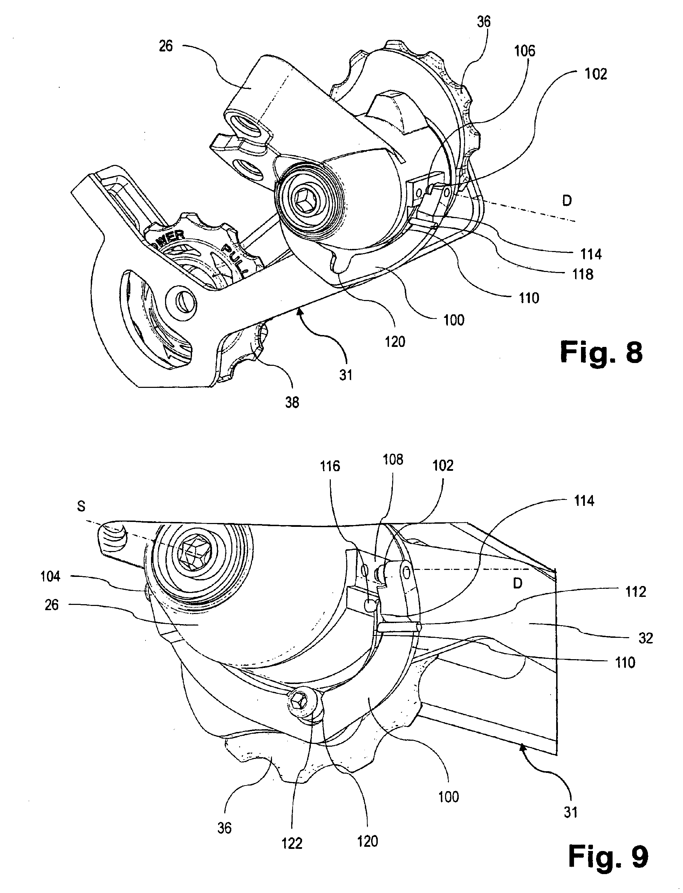

Fig. 8 und 9 zeigen eine dritte Ausführungsform der erfindungsgemäßen Umwerfereinrichtung. Diese unterscheidet sich von den bislang beschriebenen Ausführungsformen gemäß Fig. 1 bis 7 darin, dass statt eines Bolzenelements, das entlang einer Betätigungsachse B linear verlagerbar ist, ein Schwenkbügel 100 vorgesehen ist. Dieser ist über entsprechende Schwenkzapfen 102, 104 in korrespondierenden Ausnehmungen 106 schwenkbar gelagert, die an einem geeigneten Profil 108 am bewegbaren Element 26 ausgebildet sind. Zu Einstellungszwecken können mehrere Ausnehmungen 106 vorgesehen sein. Der Bügel 100 ist mit einem Federelement 110 versehen, das sich über einen Spannzapfen 112 an einer Schrägfläche 114 abstützt. Das Federelement 110 wirkt mit einem Kontaktstift 116 zusammen, der ebenfalls an dem bewegbaren Element 26 angeformt ist.

In Fig. 8 ist der Bügel 100 in seiner Passivstellung gezeigt, d.h. er ist um die Drehachse D derart verschwenkt, dass er nicht in Kontakt mit der Kettenführungsvorrichtung 31 gelangt. In dieser Stellung ist er über die Feder 110 und deren Wirkung vorgespannt und gehalten. Man erkennt, dass der Bügel 100 an seinem unteren Ende eine Ausnehmung 120 aufweist. In Fig. 9 ist der Bügel in seine Blockierstellung (Aktivstellung) geschwenkt. In dieser greift er mit seiner Ausnehmung 120 an einem Kontaktstift 122 an, wobei die Ausnehmung 120 den Kontaktstift 122 aufnimmt. Der Kontaktstift 122 ist fest an dem Verbindungsglied 32 der Kettenführungsvorrichtung 31 angebracht. Bei der in Fig. 9 gezeigten Blockierstellung wird also durch die sichere Aufnahme des Kontaktstifts 122 in der Ausnehmung 120 des an dem beweglichen Element 26 angebrachten Bügels 100 eine Relatiwerdrehung der Kettenführungsvorrichtung 31 relativ zum bewegbaren Element 26 blockiert. Die Kettenführungsvorrichtung 31 wird wiederum, wie schon mit Bezug auf Fig. 1 bis 5 beschrieben, in einer vorbestimmten Betriebsstellung relativ zum bewegbaren Element 26 gehalten, um so die Montage des Hinterrads zu erleichtern. Auch in der Blockierstellung gemäß Fig. 9 wird der Bügel 100 über die Feder 110 unter Wechselwirkung mit dem Kontaktstift 116 lagestabil gehalten. Um diese Stellung zu lösen, wird gegen die Spannkraft der Feder 110 unter Betätigung des Zapfens 112 der Bügel 100 wieder in die in Fig. 8 gezeigte Passivstellung durch Verschwenken um die Drehachse D gebracht, in der die Umwerfereinrichtung betriebsbereit ist.

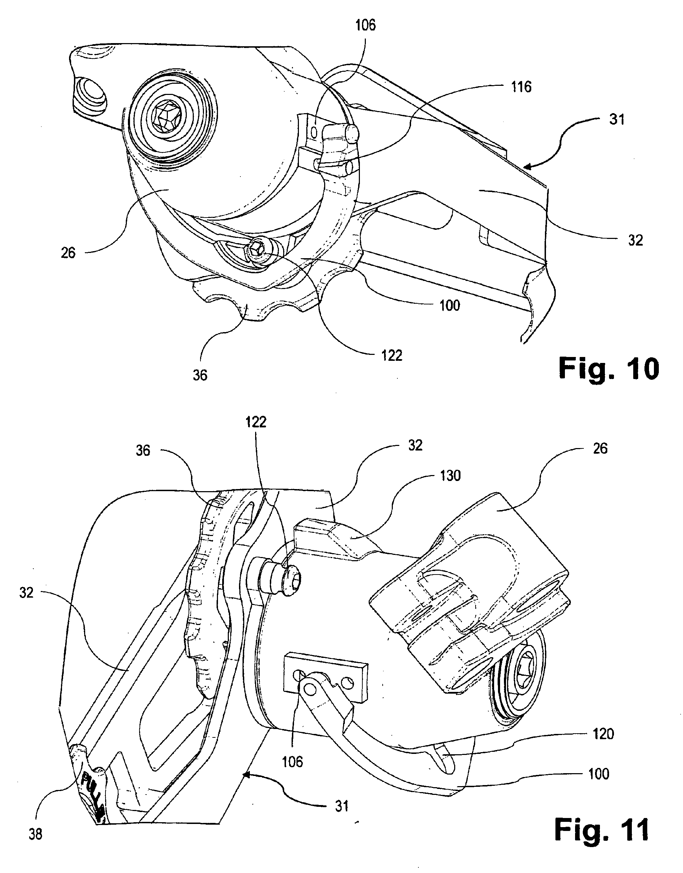

Fig. 10 und 11 zeigen eine vierte Ausführungsform in Gestalt einer leichten Abwandlung der dritten Ausführungsform gemäß Fig. 8 und 9. Bei dieser Ausführungsform wurde das Federelement 110 weggelassen. Stattdessen erfolgt eine Verschwenkung des Bügels 100 entgegen Reibkräften. Der Bügel 100 kann über den Kontaktstift 116 in der Aktivstellung gemäß Fig. 10 als auch in seiner Passivstellung gemäß Fig. 11 verrastet werden. In Fig. 11 erkennt man zudem, dass der am Verbindungsglied 32 angebrachte Kontaktstift 122 im normalen Betrieb des Umwerfers, d.h. dann, wenn die Blockiereinrichtung in ihrer Passivstellung ist, mit dem Bügel 100 nicht in Wechselwirkung treten kann. Ein sicherer Betrieb des Umwerfers 10 ist somit gewährleistet. Es sei angemerkt, dass in Fig. 11 auch ein Anschlag 130 gezeigt ist, der eine maximale Auslenkung der Kettenführungsvorrichtung 31 relativ zum bewegbaren Element 26 vorsieht.

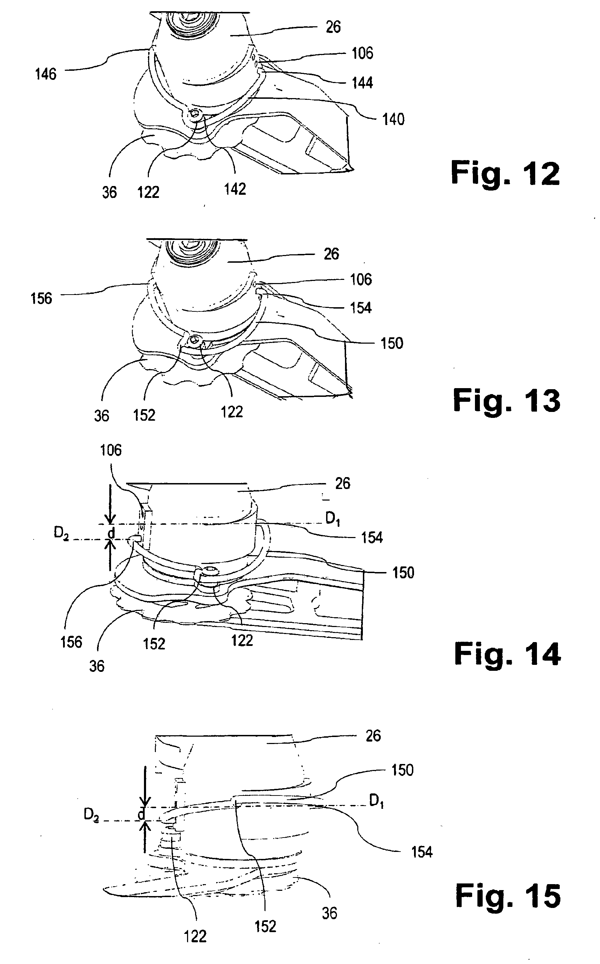

Fig. 12 bis 15 zeigen weitere alternative Ausführungsformen der Blockiervorrichtung mit einem Bügel. Anders als bei den Ausführungsformen gemäß Fig. 8 bis 11 ist dort der Bügel nicht massiv mit zusätzlichen Feder- oder Rastmitteln ausgebildet, sondern als Bügel aus einem entsprechend geformten Federdraht 140.

Fig. 12 zeigt den Bügel 140 mit gerundetem bzw. geschwungenem Verlauf, wobei zur Wechselwirkung mit dem Kontaktelement 122 in dem Bügel eine gerundet verlaufende Nase 142 eingeformt ist. Ferner ist anzumerken, dass der Bügel 140 mit seinen freien Enden 144, 146, die als Lagerzapfen dienen, nicht auf einer gemeinsamen Achse in den entsprechenden Ausnehmungen 106 am bewegbaren Element 26 angebracht ist, sondern mit Achsversatz d zwischen zwei verschiedenen Lagerachsen D1 und D2 der Lagerzapfen. Dadurch wird dem Bügel eine Vorspannung verliehen, mit der erreicht wird, dass der Bügel zwischen zwei Schwenkstellungen nur unter Überwindung einer entsprechenden Federvorspannkraft bewegt werden kann. Mit anderen Worten wird durch diese Maßnahme einer achsversetzten Anordnung der beiden zapfenartigen Enden 144 und 146 des Bügels 140 erreicht, dass der Bügel zwischen seiner Aktivstellung und seiner Passivstellung nur unter Überwindung von Federkräften bewegt werden kann.

Fig. 13 bis 15 zeigen eine weitere Ausführungsvariante mit dem Bügel 150, der in gleicher Weise wirkt wie mit Bezug auf Fig. 12 für den Bügel 140 beschrieben. Der Bügel 150 ist jedoch weniger gerundet und stattdessen etwas eckiger bzw. kantiger im Bereich der Nase 152 umgeformt. Die Wechselwirkung mit dem Kontaktstift 122 erfolgt aber in gleicher Weise wie vorstehend beschrieben. In Fig. 11 erkennt man den Achsversatz d der beiden Drehachsen D1 für das zapfenförmige Ende 154 und D2 für das zapfenförmige Ende 156. In Fig. 15 erkennt man, wie der Bügel 150 in seine Passivstellung verschwenkt und durch die achsversatzbedingte Federkraft in dieser Passivstellung gehalten wird. Ferner erkennt man, dass der Kontaktstift 152 nicht in Wechselwirkung mit dem Bügel 150 tritt, wenn die Kettenführungsvorrichtung 31 um die Schwenkachse S entsprechend Pfeil P in die Passivstellung verschwenkt wird. Schließlich erkennt man in Fig. 15 auch, dass der Kontaktzapfen 152 ebenfalls profiliert und mit einer gerundeten umlaufenden Einkerbung versehen ist, die für ein formschlüssiges Aufnehmen des Bügels 150 und ein sicheres Halten in der Blockierstellung sorgt.

Insgesamt sieht die Erfindung verschiedene Ausführungsform vor, deren Grundprinzip darin besteht, eine aktiv schaltbare Blockiervorrichtung, sei es mit einem Bolzen, einem Riegel oder einem verschwenkbaren Bügel oder einem andersartigen Blockierelement bereitzustellen, um die Kettenführungsvorrichtung in wenigstens einer vorbestimmen Betriebsstellung gezielt blockieren zu können. Dadurch ist gewährleistet, dass die Kettenführungsvorrichtung neben der Tendenz, sich in ihre Ausgangsstellung unter der Wirkung der inhärenten Federvorspannung zurückzubewegen, auch noch in dieser wenigstens einen Betriebsstellung blockiert werden kann. Diese Betriebsstellung wird in der Regel so gewählt, dass sie einen erleichterten Einbau des Hinterrads erlaubt ohne die an sich bekannten vorstehend beschriebenen Schwierigkeiten, während des Einfädelns der Hinterradachse in die hintere Fahrradgabel des Fahrradrahmens zusätzlich auch noch die Umwerfereinrichtung betätigen und die Kette auf den am Hinterrad angeordneten Ritzelsatz ausrichten zu müssen.

Der Einbau des Hinterrads wird bei entsprechender Blockierung der Umwerfereinrichtung in der Blockierstellung erheblich vereinfacht. Dies zahlt sich insbesondere dann aus, wenn die Umwerfereinrichtung mit einem Dämpfer versehen ist, der die Auslenkbewegungen zwischen beweglichem Teil 26 und Kettenführungsvorrichtung 31 durch Reibung dämpft und dadurch im Betrieb eine Schwingungsanregung unterbindet oder zumindest einschränkt. Ein solcher Dämpfer gestaltet die Montage in herkömmlicher Weise noch schwieriger. Die Erfindung schafft auch zu diesem Problem Abhilfe, da der Monteur durch vorherige Positionierung der Kettenführungsvorrichtung über die Blockiervorrichtung in der beschriebenen Weise während des Einbaus nicht auch noch gegen die Dämpfervorrichtung "arbeiten" muss.

## Patentansprüche

1. Umwerfereinrichtung (10) für eine Fahrradschaltung, insbesondere hintere Umwerfereinrichtung, umfassend:
- einen Basiskörper (12), der an einem Fahrradrahmen anbringbar ist;
- ein bewegbares Element (26), das mit dem Basiskörper (12) gekoppelt und relativ zu diesem verlagerbar ist,
- eine Kettenführungsvorrichtung (31), die mit dem bewegbaren Element (26) gekoppelt und relativ zu diesem um eine Schwenkachse verschwenkbar ist,
- eine Vorspanneinrichtung, mit der die Kettenführungsvorrichtung (31) relativ zu dem bewegbaren Element (26) um die Schwenkachse (S) in eine Ausgangsstellung vorgespannt ist, wobei die Kettenführungsvorrichtung (31) gegen eine Spannkraft der Vorspanneinrichtung aus der Ausgangsstellung heraus um die Schwenkachse (S) in verschiedene Betriebsstellungen verschwenkbar ist, und
- wenigstens eine Blockiervorrichtung (40), die dazu vorgesehen ist, die Kettenführungsvorrichtung (31) in wenigstens einer von der Ausgangsstellung abweichenden Blockierstellung relativ zu dem bewegbaren Element (26) zu blockieren,
**dadurch gekennzeichnet, dass** die Blockiervorrichtung (40) ein Blockierelement (42, 80, 100, 140, 150) aufweist, das zwischen einer Passivstellung, in der sie die Kettenführungsvorrichtung (31) relativ zu dem bewegbaren Element (26) freigibt, und wenigstens einer Aktivstellung, in der sie die Kettenführungsvorrichtung (31) in der wenigstens einen Blockierstellung hält, verlagerbar ist.

2. Umwerfereinrichtung (10) nach Anspruch 1,
**dadurch gekennzeichnet, dass** die Blockiervorrichtung (40) wenigstens ein Kontaktelement (122) aufweist, das zum Blockieren der Kettenführungsvorrichtung (31) in der wenigstens einen Blockierstellung mit dem Blockierelement (100, 140, 150) in Eingriff bringbar ist.

3. Umwerfereinrichtung (10) nach Anspruch 2,
**dadurch gekennzeichnet, dass** das Blockierelement (42, 80, 100, 140, 150) an einer Komponente von bewegbarem Element (26) und Kettenführungsvorrichtung (31) angeordnet ist, und dass das Kontaktelement (122) an der anderen Komponente von bewegbarem Element (26) und Kettenführungsvorrichtung (31) angeordnet ist.

4. Umwerfereinrichtung (10) nach einem der vorangehenden Ansprüche,
**dadurch gekennzeichnet, dass** das Blockierelement (42, 80) in Richtung der Schwenkachse (S) oder parallel hierzu verlagerbar ist.

5. Umwerfereinrichtung (10) nach einem der Ansprüche 1 bis 3,
**dadurch gekennzeichnet, dass** das Blockierelement in Richtung quer zur Schwenkachse, vorzugsweise in einer zur Längsachse im Wesentlichen orthogonalen Ebene, verlagerbar ist.

6. Umwerfereinrichtung (10) nach einem der vorangehenden Ansprüche,
**dadurch gekennzeichnet, dass** das Blockierelement (42, 80, 100, 140, 150) um eine zur Schwenkachse (S) nicht parallele Drehachse (D) verschwenkbar ist.

7. Umwerfereinrichtung (10) nach einem der Ansprüche 1 bis 5,
**dadurch gekennzeichnet, dass** das Blockierelement (42, 80) entlang einer Längsachse (B) zwischen der Aktivstellung und der Passivstellung verlagerbar ist.

8. Umwerfereinrichtung (10) nach einem der vorangehenden Ansprüche,
**dadurch gekennzeichnet, dass** das Blockierelement (42, 100, 140, 150) in die Passivstellung vorgespannt ist, vorzugsweise durch eine Federeinrichtung (66).

9. Umwerfereinrichtung (10) nach einem der vorangehenden Ansprüche,
**dadurch gekennzeichnet, dass** das Blockierelement (42, 80) von einem Schubbolzen gebildet ist, der mit einer Kontaktfläche oder einem Halteprofil ausgebildet ist, womit er in der Blockierstellung formschlüssig oder kraftschlüssig zum Blockieren der Kettenführungsvorrichtung (31) relativ zum bewegbaren Element (26) an einer dieser Komponenten angreift.

10. Umwerfereinrichtung (10) nach Anspruch 9,
**dadurch gekennzeichnet, dass** der Schubbolzen (42, 80) eine Druckfläche (50) oder einen Betätigungsvorsprung (82) zur manuellen Betätigung aufweist.

11. Umwerfereinrichtung (10) nach einem der Ansprüche 1 bis 8,
**dadurch gekennzeichnet, dass** das Blockierelement (100, 140, 150) von einem Schwenkbügel gebildet ist, der zwischen der Blockierstellung der Passivstellung verschwenkbar ist.

12. Umwerfereinrichtung (10) nach einem der vorangehenden Ansprüche,
**dadurch gekennzeichnet, dass** das Blockierelement in seiner Blockierstellung, vorzugsweise durch eine Federvorspannung oder durch Verklemmen oder durch Verrasten, festlegbar ist.

13. Umwerfereinrichtung (10) nach einem der vorangehenden Ansprüche, **gekennzeichnet durch** eine Dämpfungsanordnung, die zwischen dem bewegbaren Element und der Kettenführungsvorrichtung (31) zum Dämpfen der Relativbewegung vorgesehen ist.

14. Umwerfereinrichtung (10) nach Anspruch 13,
**dadurch gekennzeichnet, dass** die Dämpfungsanordnung eine Reibvorrichtung zur Ausübung von Reibkräften während des Verschwenkens der Kettenführungsvorrichtung (31) relativ zu dem bewegbaren Element (26) aufweist.

## Claims

1. Derailleur device (10) for a bicycle gear system, in particular rear derailleur device, comprising:
- a basic body (12) which is attachable to a bicycle frame;
- a movable element (26) which is coupled to the basic body (12) and is shiftable relative thereto,
- a chain-guiding device (31) which is coupled to the movable element (26) and is pivotable relative to the latter about a pivot axis,
- a pretensioning device with which the chain-guiding device (31) is pretensioned relative to the movable element (26) about the pivot axis (S) into a starting position, wherein the chain-guiding device (31) is pivotable counter to a tensioning force of the pretensioning device out of the starting position about the pivot axis (S) into various operating positions, and
- at least one blocking device (40) which is provided to block the chain-guiding device (31) in at least one blocking position, which differs from the starting position, relative to the movable element (26),
**characterized in that** the blocking device (40) has a blocking element (42, 80, 100, 140, 150) which is shiftable between a passive position, in which said blocking device releases the chain-guiding device (31) relative to the movable element (26), and at least one active position, in which said blocking device keeps the chain-guiding device (31) in the at least one blocking position.

2. Derailleur device (10) according to Claim 1, **characterized in that** the blocking device (40) has at least one contact element (122) which can be brought into engagement with the blocking element (100, 140, 150) in order to block the chain-guiding device (31) in the at least one blocking position.

3. Derailleur device (10) according to Claim 2, **characterized in that** the blocking element (42, 80, 100, 140, 150) is arranged on one component out of the movable element (26) and the chain-guiding device (31), and **in that** the contact element (122) is arranged on the other component out of the movable element (26) and chain-guiding device (31).

4. Derailleur device (10) according to one of the preceding claims, **characterized in that** the blocking element (42, 80) is shiftable in the direction of the pivot axis (S) or parallel thereto.

5. Derailleur device (10) according to one of Claims 1 to 3, **characterized in that** the blocking element is shiftable in a direction transversely with respect to the pivot axis, preferably in a plane which is substantially orthogonal with respect to the longitudinal axis.

6. Derailleur device (10) according to one of the preceding claims, **characterized in that** the blocking element (42, 80, 100, 140, 150) is pivotable about an axis of rotation (D) which is not parallel to the pivot axis (S).

7. Derailleur device (10) according to one of Claims 1 to 5, **characterized in that** the blocking element (42, 80) is shiftable along a longitudinal axis (B) between the active position and the passive position.

8. Derailleur device (10) according to one of the preceding claims, **characterized in that** the blocking element (42, 100, 140, 150) is pretensioned into the passive position, preferably by means of a spring device (66).

9. Derailleur device (10) according to one of the preceding claims, **characterized in that** the blocking element (42, 80) is formed by a sliding bolt which is designed with a contact surface or a retaining profile, with which said sliding bolt acts in a form-fitting or frictional manner in the blocking position on the chain-guiding device (31) or the movable element (26) in order to block said chain-guiding device (31) relative to said movable element (26).

10. Derailleur device (10) according to Claim 9, **characterized in that** the sliding bolt (42, 80) has a pressure surface (50) or an actuating projection (82) for the manual actuation.

11. Derailleur device (10) according to one of Claims 1 to 8, **characterized in that** the blocking element (100, 140, 150) is formed by a pivoting bow which is pivotable between the blocking position and the passive position.

12. Derailleur device (10) according to one of the preceding claims, **characterized in that** the blocking element is fixable in the blocking position thereof preferably by spring pretensioning or by clamping or by latching.

13. Derailleur device (10) according to one of the preceding claims, **characterized by** a damping arrangement which is provided between the movable element and the chain-guiding device (31) in order to damp the relative movement.

14. Derailleur device (10) according to Claim 13, **characterized in that** the damping arrangement has a friction device for applying friction forces during the pivoting of the chain-guiding device (31) relative to the movable element (26).

## Revendications

1. Dispositif à dérailleur (10) pour un système de changement de vitesses de bicyclette, en particulier dispositif à dérailleur arrière, comprenant :
- un corps de base (12) qui peut être monté sur un cadre de bicyclette ;
- un élément déplaçable (26) accouplé au corps de base (12) et pouvant être décalé par rapport à celui-ci,
- un dispositif de guidage de chaîne (31) accouplé à l'élément déplaçable (26) et pouvant être pivoté par rapport à celui-ci autour d'un axe de pivotement,
- un dispositif de précontrainte avec lequel le dispositif de guidage de chaîne (31) est précontraint par rapport à l'élément déplaçable (26) autour de l'axe de pivotement (S) dans une position de départ, le dispositif de guidage de chaîne (31) pouvant être pivoté à l'encontre d'une force de serrage du dispositif de précontrainte hors de la position de départ autour de l'axe de pivotement (S) dans différentes positions fonctionnelles, et
- au moins un dispositif de blocage (40) prévu pour bloquer le dispositif de guidage de chaîne (31) dans au moins une position de blocage s'écartant de la position de départ par rapport à l'élément déplaçable (26),
**caractérisé en ce que** le dispositif de blocage (40) présente un élément de blocage (42, 80, 100, 140, 150) qui peut être décalé entre une position passive dans laquelle il libère le dispositif de guidage de chaîne (31) par rapport à l'élément déplaçable (26) et au moins une position active dans laquelle il retient le dispositif de guidage de chaîne (31) dans l'au moins une position de blocage.

2. Dispositif à dérailleur (10) selon la revendication 1,
**caractérisé en ce que** le dispositif de blocage (40) présente au moins un élément de contact (122) qui peut être amené, en vue du blocage du dispositif de guidage de chaîne (31), en prise avec l'élément de blocage (100, 140, 150) dans l'au moins une position de blocage.

3. Dispositif à dérailleur (10) selon la revendication 2,
**caractérisé en ce que** l'élément de blocage (42, 80, 100, 140, 150) est disposé au niveau d'un composant parmi l'élément déplaçable (26) et le dispositif de guidage de chaîne (31), et **en ce que** l'élément de contact (122) est disposé au niveau de l'autre composant parmi l'élément déplaçable (26) et le dispositif de guidage de chaîne (31).

4. Dispositif à dérailleur (10) selon l'une quelconque des revendications précédentes, **caractérisé en ce que** l'élément de blocage (42, 80) peut être décalé dans la direction de l'axe de pivotement (S) ou parallèlement à celui-ci.

5. Dispositif à dérailleur (10) selon l'une quelconque des revendications 1 à 3,
**caractérisé en ce que** l'élément de blocage peut être décalé dans la direction transversale par rapport à l'axe de pivotement, de préférence dans un plan essentiellement perpendiculaire à l'axe longitudinal.

6. Dispositif à dérailleur (10) selon l'une quelconque des revendications précédentes, **caractérisé en ce que** l'élément de blocage (42, 80, 100, 140, 150) peut pivoter autour d'un axe de rotation (D) non parallèle à l'axe de pivotement (S).

7. Dispositif à dérailleur (10) selon l'une quelconque des revendications 1 à 5,
**caractérisé en ce que** l'élément de blocage (42, 80) peut être décalé le long d'un axe longitudinal (B) entre la position active et la position passive.

8. Dispositif à dérailleur (10) selon l'une quelconque des revendications précédentes, **caractérisé en ce que** l'élément de blocage (42, 100, 140, 150) est précontraint dans la position passive, de préférence par un dispositif de ressort (66).

9. Dispositif à dérailleur (10) selon l'une quelconque des revendications précédentes, **caractérisé en ce que** l'élément de blocage (42, 80) est formé par un boulon de poussée, qui est réalisé avec une surface de contact ou un profilé de retenue, avec lequel ou laquelle il vient en prise dans la position de blocage par engagement positif ou par engagement par force en vue du blocage du dispositif de guidage de chaîne (31) par rapport à l'élément déplaçable (26) au niveau de l'un de ces composants.

10. Dispositif à dérailleur (10) selon la revendication 9,
**caractérisé en ce que** le boulon de poussée (42, 80) présente une surface de pression (50) ou une saillie d'actionnement (82) pour la commande manuelle.

11. Dispositif à dérailleur (10) selon l'une quelconque des revendications 1 à 8,
**caractérisé en ce que** l'élément de blocage (100, 140, 150) est formé par un étrier pivotant qui peut être pivoté entre la position de blocage et la position passive.

12. Dispositif à dérailleur (10) selon l'une quelconque des revendications précédentes, **caractérisé en ce que** l'élément de blocage, dans sa position de blocage, peut être fixé de préférence par une précontrainte à ressort ou par un serrage ou par un encliquetage.

13. Dispositif à dérailleur (10) selon l'une quelconque des revendications précédentes, **caractérisé par** un agencement d'amortissement qui est prévu entre l'élément déplaçable et le dispositif de guidage de chaîne (31) pour amortir le mouvement relatif.

14. Dispositif à dérailleur (10) selon la revendication 13,
**caractérisé en ce que** l'agencement d'amortissement présente un dispositif de friction pour exercer des forces de friction pendant le pivotement du dispositif de guidage de chaîne (31) par rapport à l'élément déplaçable (26).
